# EUROPEAN PATENT APPLICATION

(11) **EP 2 690 579 A1**
(43) Date of publication of application: **29.01.2014**
(21) Application number: 12305919.8
(22) Date of filing: 27.07.2012
(51) Int. Cl.: G06F 21/79, G06F 21/77, G06F 21/55, G06F 12/08, G06F 12/14

(54) **Method and device for protecting against fault attack(s) an electronic device using a cache memory**

(71) Applicant: Gemalto SA, 92190 Meudon (FR)
(72) Inventor: Gauteron, Laurent, 13705 La Ciotat (FR); Villegas, Karine, 13705 La Ciotat (FR)

(57) **Abstract**

A method is intended for protecting against fault attack(s) an electronic device (ED) comprising hardware and software capable of executing a sensitive process (SP) using a cache memory (CM) and implementing redundancy checks, said method comprising at least a step (i) during which said cache memory (CM) is filled with a first value originating from an external memory (EM), a step (ii) during which said first value is read into said cache memory (CM) and a step (iii) implementing at least a redundancy check, characterized in that it further comprises a fundamental step to guarantee that any redundant reading inside the redundancy check will extract a value from cache memory (CM) which is numerically equal to the genuine value in the external memory (EM).

## Description

### Technical field

The present invention relates to devices or products comprising hardware and software capable of executing a sensitive process using a cache memory, and needing to be resistant to fault attacks.

### Background of the invention

A fault attack is a type of physical attack that consists in submitting a device to unusual environmental conditions to modify the execution of a sensitive process (for instance by introducing a value discrepancy) and then deduce sensitive information from its alter behaviour or results and/or to modify the attacked sensitive process. For instance, the aim of a fault attack may be determination of a secret or a ciphering/deciphering or cryptographic key or modification of a value to get additional rights (such as access or credits).

As it is known by the man skilled in the art, an efficient way for detecting fault attacks during a sensitive process consists in introducing redundancies into the code.

For instance code redundancy may consist in reading a value, that is stored into a memory of an electronic device at different instants separated by a chosen time interval, and then in considering that this electronic device has been subject to a fault attack when these read values differ therebetween.

Unfortunately, such a code redundancy does not allow detecting fault attacks that occur when the external memory value is written into a cache memory. Indeed, if an attacker succeeds to introduce a discrepancy into the sensitive process, for instance by replacing the external memory value with a faulty value during its writing into the cache memory, every reading will be performed into the cache memory and will return the faulty value it stores. The same cache memory value being returned at each reading, it is not possible to detect that it is a faulty value resulting from a fault attack.

### Summary of the invention

So, an objective of the invention is to improve fault attack detections into electronic devices comprising hardware and software capable of executing a sensitive process using a cache memory.

More precisely, the invention provides a method for protecting against fault attack(s) an electronic device comprising hardware and software capable of executing a sensitive process using a cache memory and implementing redundancy checks, said method comprising at least a step (i) during which said cache memory is filled with a first value originating from an external memory, a step (ii) during which said first value is read into said cache memory and a step (iii) implementing at least a redundancy check, **characterized in that** it further comprises a fundamental step to guarantee that any redundant reading inside the redundancy check will extract a value from cache memory which is numerically equal to the genuine value in the external memory.

The fundamental step of the invention implies that none redundancy check is processed if a risk exists that the value stored in the cache memory is wrong. It enables to insure that redundancy checks are not based on a corrupted value. This increases the efficiency of the fault attack detection by eliminating the risk to make redundancy checks based on a wrong value as it previously occurs.

The method according to the invention may include additional characteristics considered separately or combined.

In a first embodiment, the fundamental step comprises a systematic emptying (or voiding) of the cache memory before each reading of the first value into said cache memory for a redundancy check.

By systematically emptying (or voiding) the cache memory, the method of the invention implies that any redundancy in the code reads again the genuine value in the external memory because none value is available in cache memory. This embodiment forces the recopying of the genuine value in the cache memory.

In a second embodiment, the device implementing hardware integrity checks, wherein the value stored in the cache memory is compared with the value stored into the external memory, the fundamental step introduces, between a reading and its redundancy, a delay of a chosen duration longer than the duration between two integrity checks.

This embodiment consists in waiting a next integrity check of the sensitive code before introducing a redundancy. It ensures that an integrity check is always performed by the hardware before the execution of the redundancy.

Thus, if the integrity check fails and thus if a corruption of the value in cache memory is detected, a security action is triggered. If the integrity check does not fail, a redundancy check is further performed by software.

Thus, in case where the first value is not detected as corrupted during integrity check, the value in cache memory is read for redundancy check, to detect if the electronic device is subject to a fault attack.

In case where a redundancy check fails, a security action may be triggered. Redundancy check may be periodically or randomly implemented.

The invention also provides a protection device, intended for equipping an electronic device comprising hardware and software capable of executing a sensitive process using a cache memory, and arranged for implementing redundancy checks, for filing said cache memory with a first value originating from an external memory, for reading said first value into said cache memory, **characterized in that** it is arranged for guaranteeing that any redundant reading inside the redundancy check will extract a value from cache memory which is numerically equal to the genuine value in the external memory.

The protection device according to the invention may include additional characteristics considered separately or combined, and notably:
- in a first embodiment, it may be arranged for triggering a systematic emptying (or voiding) of the cache memory before each redundant reading of the first value into said cache memory inside a redundancy check and then for refilling the cache memory with the value in the external memory;
- in a second embodiment, it may be arranged for implementing hardware integrity checks, wherein the integrity of the value stored in the cache memory is checked, for introducing, between a reading and its redundancy, a delay of a chosen duration longer than the duration between two integrity checks.

The invention also provides an electronic device comprising hardware and software capable of executing a sensitive process using a cache memory and a control device such as the one above introduced.

This electronic device may be chosen from a group comprising at least a smart card, a memory card reader, a communication device, and a portable memory means.

### Brief description of the figure

Other features and advantages of the invention will become apparent on examining the detailed specifications hereafter and the appended drawings, wherein:
- figure 1 schematically and functionally illustrates an example of electronic device with a protection device according to the invention,
- figure 2 schematically illustrates a first example of algorithm including the steps of a first embodiment of a protection method according to the invention, and
- figure 3 schematically illustrates a second example of algorithm including the steps of a second embodiment of a protection method according to the invention.

### Detailed description of the preferred embodiment

The appended drawings may serve not only to complete the invention, but also to contribute to its definition, if need be.

The invention aims, notably, at offering a protection method, and an associated protection device PD, intended for protecting an electronic device ED from fault attack(s) of attacker(s).

The invention concerns any electronic device ED comprising hardware and software capable of executing a sensitive process SP using a cache memory CM, notably for security redundancy.

In the following description, it will be considered that the electronic device ED is a smart card. For instance, it may be a credit card or an electronic identity card or else an electronic passport. But the invention is not limited to this type of electronic device. It concerns a lot of secured devices, and notably memory card readers, communication devices (for instance smart phones or electronic tablets or else Set-Top Boxes, Machine To Machine), and portable memory means (for instance USB keys). For instance, the sensitive process may be an electronic transaction or an user / mutual authentication or else an exchange of secret data (obtained by means of a ciphering or cryptographic algorithm).

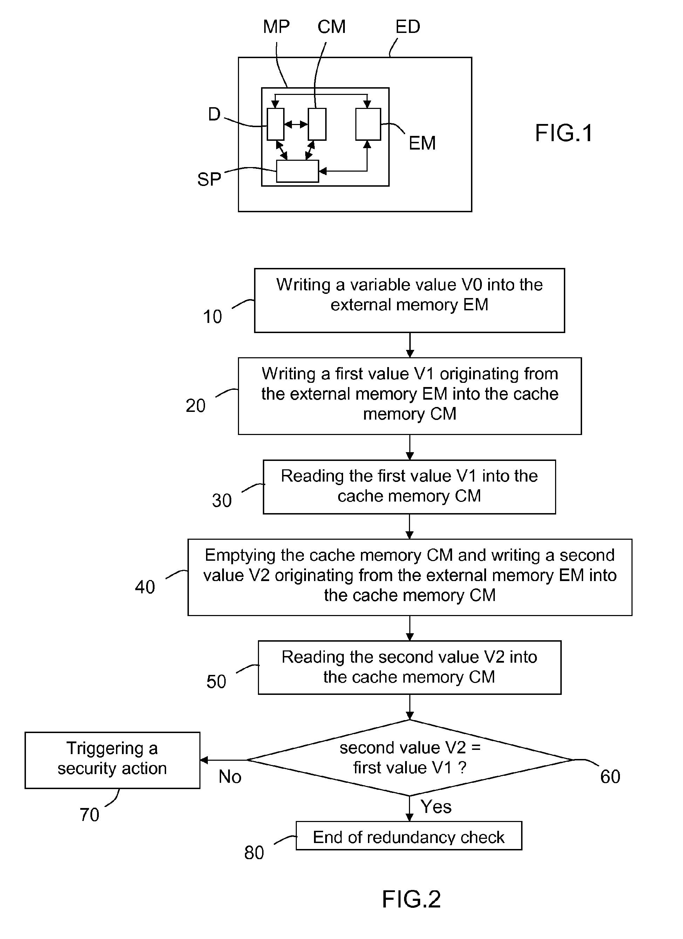

In the example illustrated in figure 1 the electronic device ED comprises a microprocessor (or microcontroller) MP, which comprises hardware and software capable of executing a sensitive process SP using a cache memory CM, and a protection device PD according to the invention coupled to this sensitive process SP in order to protect it against fault attack(s) of attacker(s).

It is important to note that the protection device PD is not mandatorily located into the microprocessor MP (or any equivalent means, such as integrated circuits, for instance). Indeed, it may be a device that is coupled to the microprocessor MP and may access to the sensitive process SP that is running in it. Such a device PD may be also located into another device of the electronic device ED.

So a protection device PD can be made of software modules, at least partly, or of electronic circuit(s) or hardware modules, or else of a combination of hardware and software modules. In case where it is made of software modules it can be stored in a memory means or in any computer software product which can be read by an electronic device.

As mentioned before, the invention proposes a protection method based on redundancy checks and comprising three main steps (i), (ii) and (iii).

Such a method may be implemented, at least partly, by a protection device PD associated to an electronic device ED. Moreover, such a method may be periodically or randomly implemented, for instance.

A first step (i) of this protection method comprises a phase during which the cache memory CM of the electronic device ED is filled at a chosen address with a first value V1 originating from an external memory EM. This first filling may be carried out by the sensitive process running into the microprocessor MP of the electronic device ED or by the protection device D. This first value V1 is supposed to be a copy of a variable value V0 that is stored into the external memory EM. Such a variable value may be, for instance, representative of an action, such as a PIN verification, or of a status, or of the current value of a counter, or of a transaction amount, or else a part of a secret key.

It is important to note that this first step (i) may be preceded by a preliminary step or may comprise a preliminary phase during which the external memory EM is filled with the variable value V0.

In the example illustrated in figure 1 the external memory EM is defined into the microprocessor MP. But this is not mandatory. Indeed, the external memory EM could be located into another electronic device capable of establishing communications with the electronic device ED.

During the first filling of the cache memory CM, the electronic device ED may be subject to a fault attack intended to introduce a discrepancy by replacing the variable value V0 (stored into the external memory EM and to be stored into the cache memory CM) with a faulty value.

A second step (ii) of the protection method comprises a phase during which the first value is read into the chosen address of the cache memory CM by the protection device D.

A third step (iii) of the protection method is a redundancy test. It is such that it further comprises a fundamental step to guarantee that any redundant reading inside the redundancy check will extract a value from cache memory which is numerically equal to the genuine value in the external memory.

At least two different embodiments of the third step (iii) may be envisaged.

A first one of these embodiments is comprised in the first example of algorithm illustrated in figure 2.

As illustrated this first algorithm starts with a sub step 10 during which the external memory EM is filled with a variable value V0 representative of an action.

Then follows a sub step 20 during which a first value V1 originating from the external memory EM (and supposed to be the variable value V0) is written into a dedicated address of the cache memory CM of the electronic device ED.

The first step (i) of the protection method comprises the sub step 20 and possibly the sub step 10.

Then the first algorithm comprises a sub step 30 during which the first value V1 is read into the dedicated address of the cache memory CM. The second step (ii) of the protection method comprises this sub step 30. The reading of the value V1 may serve in a calculation that will be redundantly performed later.

Then the first algorithm comprises a sub step 40 during which the cache memory CM is emptied (or voided) at the above mentioned dedicated address, and then this cache memory CM is filled again into the same dedicated address with a second value V2 originating from the external memory EM (and supposed to be the variable value V0).

In this embodiment of the third step (iii), to ensure that the value in cache memory (CM) is equal to the genuine one, the first value V1 stored in cache memory is systematically regarded as different from the value V0 stored into the external memory EM. It is thus deleted. In other words, one considers that there is always a difference between V1 and V0 without carrying out any comparison between V1 and V0. So, the cache memory CM is systematically emptied (or voided) after the first value V1 has been read into the cache memory CM. This implies a new filling of the cache memory with a value read in the external memory and thus corrected if ever the first copying was attacked. The redundant reading will thus extract a genuine value from the cache memory.

In a variant, before emptying the cache memory CM, the first value V1 could be first compared with the variable value V0, preferably through hardware operations.

Then the first algorithm comprises a sub step 50 during which the second value V2 is read into the dedicated address of the cache memory CM.

Then the first algorithm may follow with a sub step 60 during which the second value V2 is compared with the first value V1 or a redundant calculation is performed using the value V2 stored in the cache memory CM and the result is compared to a same previously performed calculation.

If V2 ≠ V1 or the results of the calculations are not identical, the first algorithm comprises a sub step 70 during which a security action is triggered because it is considered that the electronic device ED has been subject to a fault attack. So no other sensitive action may be carried out with the electronic device ED.

If V2 = V1, the first algorithm comprises a sub step 80 during which the redundancy check (and therefore the protection method) comes to an end because it is considered that the electronic device ED has not yet been subject to a fault attack. So other sensitive actions, such as a transaction or an user authentication, may be possibly carried out with the electronic device ED.

In this first example, the third step (iii) of the protection method comprises the sub steps 40 to 80.

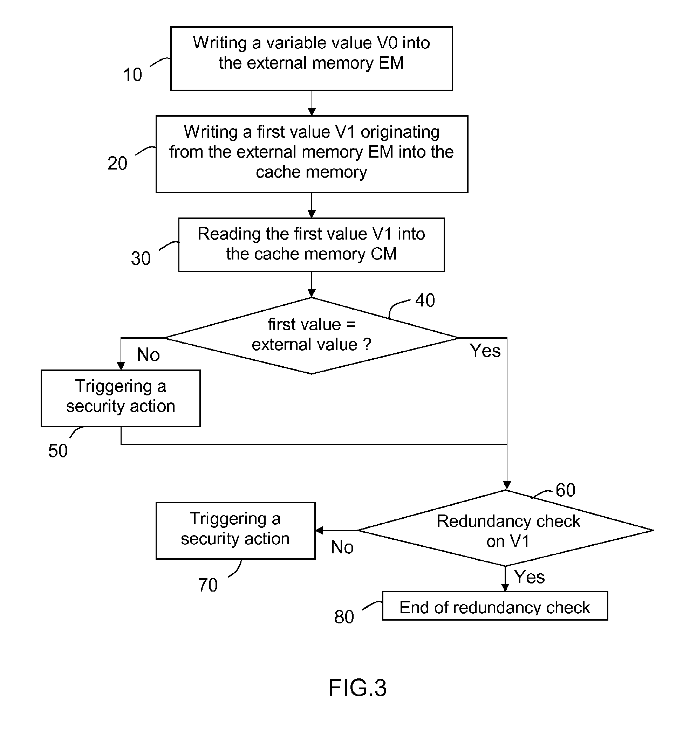

A second embodiment is comprised in the second example of algorithm illustrated in figure 3.

As illustrated this second algorithm starts with a sub step 10 during which the external memory EM is filled with a variable value V0 representative of an action.

Then it comprises a sub step 20 during which a first value V1 originating from the external memory EM (and supposed to be the variable value V0) is written into a dedicated address of the cache memory CM of the electronic device ED.

The first step (i) of the protection method comprises the sub step 20 and possibly the sub step 10.

Then the second algorithm comprises a sub step 30 during which the first value V1 is read into the dedicated address of the cache memory CM. The second step (ii) of the protection method comprises this sub step 30.

Then the second algorithm comprises a sub step 40 during which the integrity of the first value V1 is checked. This check is like and indirect comparison with the variable value V0 (stored into the external memory EM). This integrity check occurs during a time interval having a chosen duration. It is typically an hardware implemented integrity check. This chosen duration may be equal to N clock cycles of the microprocessor MP (for instance N = 300). So, during this time interval one could either only proceeds to the cache integrity check and therefore waits for its result or executes some noisy process to make difficult reverse engineering of this process.

If V1 ≠ V0 at the end of the time interval, the second algorithm may follow with a sub step 50 during which a security action is triggered because it is considered that the electronic device ED has been subject to a fault attack.

If V1 = V0 at the end of the time interval, the second algorithm may follow with a sub step 60 where a redundancy check is performed using the value V1 stored in the cache memory CM.

The value is thus not refreshed. Nevertheless the genuineness of the value V1 is guaranteed by the previously implemented integrity check.

The redundancy check is thus classically performed through a comparison with the value previously read in the cache memory CM or through a comparison of the result of a redundant calculation using the value read in cache memory CM.

If redundancy check fails, the second algorithm comprises a sub step 70 during which a security action is triggered because it is considered that the electronic device ED has been subject to a fault attack. So no other sensitive action may be carried out with the electronic device ED.

If the redundancy succeeds, the second algorithm comprises a sub step 80 during which the cache check (and therefore the protection method) comes to an end because it is considered that the electronic device ED has not yet been subject to a fault attack. So other sensitive actions, such as a transaction or an user authentication, may be possibly carried out with the electronic device ED.

In this second example, the third step (iii) of the protection method comprises the sub steps 40 to 80.

The invention offers a low cost solution to by-pass a hardware cache mechanism that induces incontrollable and weak data manipulation/storage regarding fault attack.

The invention is not limited to the embodiments of protection method, protection device and electronic device described above, only as examples, but it encompasses all alternative embodiments which may be considered by one skilled in the art within the scope of the claims hereafter.

## Claims

1. Method for protecting against fault attack(s) an electronic device (ED) comprising hardware and software capable of executing a sensitive process (SP) using a cache memory (CM) and implementing redundancy checks, said method comprising at least a step (i) during which said cache memory (CM) is filled with a first value originating from an external memory (EM), a step (ii) during which said first value is read into said cache memory (CM) and a step (iii) implementing at least a redundancy check, **characterized in that** it further comprises a fundamental step to guarantee that any redundant reading inside the redundancy check will extract a value from cache memory (CM) which is numerically equal to the genuine value in the external memory (EM).

2. Method according to claim 1, **characterized in that** in the fundamental step comprises a systematic emptying of the cache memory before each redundant reading of the first value into said cache memory inside a redundancy check.

3. Method according to claim 2, **characterized in that** said cache memory (CM) is systematically emptied after said first value has been read into said cache memory (CM).

4. Method according to claim 1, **characterized in that**, the device implementing hardware integrity checks wherein the integrity of the value stored in the cache memory is checked, the fundamental step introduces, between a reading and and its redundancy, a delay of a chosen duration longer than the duration between two integrity checks.

5. Method according to claim 4, **characterized in that**, in case where said first value is not detected as corrupted during integrity check, the value in cache memory (CM) is read for redundancy check.

6. Method according to one of claims 1 to 5, **characterized in that**, in case where a redundancy check fails, a security action is triggered.

7. Method according to one of claims 1 to 6, **characterized in that** redundancy checks are periodically implemented.

8. Method according to one of claims 1 to 6, **characterized in that** redundancy checks are randomly implemented.

9. Protection device (PD) for an electronic device (ED) comprising hardware and software capable of executing a sensitive process (SP) using a cache memory (CM), said protection device (PD) being arranged for implementing redundancy checks, for filing said cache memory (CM) with a first value originating from an external memory (EM), for reading said first value into said cache memory (CM), **characterized in that** it is arranged for guaranteeing that any redundant reading inside the redundancy check will extract a value from cache memory (CM) which is numerically equal to the genuine value in the external memory (EM).

10. Protection device according to claim 9, **characterized in that** it is arranged, in case of difference, for triggering a systematic emptying (or voiding) of the cache memory before each redundant reading of the first value into said cache memory inside a redundancy check and then the filling of said cache memory (CM) with said genuine value.

11. Protection device according to claim 9, **characterized in that** it is arranged for implementing hardware integrity checks, wherein the integrity of the value stored in the cache memory is checked, for introducing, between a reading and its redundancy, a delay of a chosen duration longer than the duration between two integrity checks.

12. Electronic device (ED) comprising hardware and software capable of executing a sensitive process (SP) using a cache memory (CM), **characterized in that** it further comprises a protection device (PD) according to one of claims 9 to 11.

13. Electronic device according to claim 12, **characterized in that** it is chosen from a group comprising at least a smart card, a memory card reader, a communication device, and a portable memory means.
